Europäisches Patentamt

European Patent Office

Office européen des brevets

(11) Veröffentlichungsnummer: **0 291 574 B1**

# (12) EUROPÄISCHE PATENTSCHRIFT

(45) Veröffentlichungstag der Patentschrift: **05.02.92**

(21) Anmeldenummer: **87116049.5**

(22) Anmeldetag: **31.10.87**

(51) Int. Cl.⁵: **B01D  33/333**

(54) **Filterrechen.**

(30) Priorität: **15.05.87 DE 3716274**

(43) Veröffentlichungstag der Anmeldung:
**23.11.88 Patentblatt  88/47**

(45) Bekanntmachung des Hinweises auf die
Patenterteilung:
**05.02.92 Patentblatt  92/06**

(84) Benannte Vertragsstaaten:
**AT BE CH DE FR GB IT LI NL SE**

(56) Entgegenhaltungen:
**DE-A- 3 004 961**
**DE-C- 163 122**
**FR-A- 600 111**
**US-A- 4 302 331**

**G.M.F. WASSER ABWASSER, Band 125, Nr. 5,
Mai 1984, Seiten 266-269, München, DE; H.
SCHÜSSLER: "Abwasserfeinsiebung in kommunalen Klärenlagen"**

(73) Patentinhaber: **Frankenberger, Dieter
Vor dem hohen Stein
W-6301 Pohlheim 2(DE)**

(72) Erfinder: **Frankenberger, Dieter
Vor dem hohen Stein
W-6301 Pohlheim 2(DE)**

(74) Vertreter: **Missling, Arne, Dipl.-Ing.
Patentanwalt Bismarckstrasse 43
W-6300 Giessen(DE)**

## Beschreibung

Die Erfindung betrifft einen Filterrechen gemäß dem Oberbegriff von Anspruch 1.

Zur mechanischen Reinigung von insbesondere strömenden Abwässern und verunreinigten Flüssigkeiten sind sogenannte Paternoster-Filterrechen bekannt, die in einem meist geneigt angeordneten Rahmengestell ein motorisch angetriebenes endloses Filterband führen. Dieses trägt eine Vielzahl gleicher Filterelemente, die z.B. hakenförmig ausgebildet und an Armen angelenkt sein können, welche parallel verlaufen und je nach ihrem Abstand voneinander jeweils eine eng- bis weitmaschige Filteroberfläche bilden. Um Feststoffe in der zu reinigenden Flüssigkeit sicher zu erfassen, muß die Filterweite gering gehalten werden; kleine Spaltbreiten bedingen jedoch eine insgesamt große Filterfläche und infolgedessen einen großen Querschnitt des Zulaufkanals. In ihm sind dazu nur entsprechend niedrige Fließgeschwindigkeiten möglich, was zu vermehrten Ablagerungen führt. Die herkömmlichen Filterrechen sind nicht bloß in der Herstellung teuer, sie erfordern bei auftretenden Schäden auch sehr aufwendige Reparaturen.

Es besteht mithin ein Bedürfnis an verbesserten Filterrechen. Ein wichtiges Ziel der Erfindung ist es, unter Vermeidung der Nachteile des Standes der Technik mit wirtschaftlichen Mitteln einen Filterrechen der eingangs genannten Art so weiterzuentwickeln, daß bei übersichtlichem Aufbau und problemloser Montage eine zuverlässige Reinigung auch in engeren Kanälen gewährleistet ist. Außerdem sollen die ausgetragenen Feststoffe weitestgehend entwässert werden.

Aus der Zeitschrift gwf-wasser/abwasser 125 - (1984) 5, Seiten 266 bis 269 ist es bereits bekannt, statt der genannten Filterelemente Siebkorb-Filterelemente einzusetzen, die aber ebenfalls aus einem endlosen Band mit Gliedern aus nebeneinanderliegenden (Kunststoff-) Filterelementen bestehen. Auch hier liegen die Kosten für die Herstellung und Wartung recht hoch.

Ferner ist es aus der DE-C-163 122 auch schon bekannt, anstelle von siebartigen nunmehr rostartige Filterelemente zu verwenden; sie gestatten zwar eine sehr hohe Fließgeschwindigkeit im Kanal, lassen aber andererseits Feststoffe passieren, deren Entfernung erwünscht ist.

Hauptmerkmale der Erfindung sind im kennzeichnenden Teil von Anspruch 1 angegeben. Ausgestaltungen sind Gegenstand der Ansprüche 2 bis 12.

Indem die Filterelemente erfindungsgemäß teils als Lochblech-Siebkörbe, teils aber als Stab-Roste ausgebildet sind, erreicht man mit überaus einfachen Mitteln eine intensive Reinigungswirkung. Der neue Filterrechen reinigt das Abwasser von allen unerwünschten Feststoffen, die mit herkömmlichen Rechenanlagen nur unzureichend erfaßt wurden. Er ist im Aufbau unkompliziert und somit störungsfrei. Die sehr stabilen Filterelemente fördern die Feststoffe einwandfrei zum Abwurf, wobei sie unterwegs gut entwässert werden. Die Flüssigkeitsverluste sind mithin gering, und das Rechengut kann, mit verhältnismäßig wenig Wasser belastet, ausgetragen und abtransportiert werden.

Die freie bzw. Durchlaß-Fläche der Filterelemente ist groß; sie beträgt wenigstens 50 % der Gesamtfläche, nach Anspruch 2 über 70 % der Gesamtfläche. Dies ist ein wesentlicher Fortschritt gegenüber dem Stand der Technik, da nicht nur eine erheblich bessere Reinigungswirkung erzielt wird, sondern auch die Fließgeschwindigkeit im Kanal erhalten bleibt. Es treten daher wenig Ablagerungen auf, und die herkömmlich notwendige Kanalverbreiterung entfällt.

Laut Anspruch 3 liegt die lichte Weite der Lochungen bzw. Durchgangsöffnungen im Bereich von 3 mm bis 15 mm. Gemäß Anspruch 4 sind die Zwischenräume zwischen den Stäben wenigstens gleich deren halber Stärke, vorzugsweise gleich ihrer Stärke oder größer als diese. Beide Maßnahmen erlauben einen besonders hohen Anteil der freien Fläche an der Gesamtfläche. Zwar waren vergleichbare Spaltbreiten auch herkömmlich vorhanden, jedoch mit viel kleineren Durchlaß-Flächenanteilen und entsprechender Bremsung des Abflusses.

Gemäß Anspruch 5 können im unteren Teil des Filterbandes beiderseits Abdichtbürsten angeordnet sein, die laut Anspruch 6 anströmseitig entlang der ganzen Eintauchtiefe des unteren Teils vorhanden sind, welcher abströmseitig offen ist. Dadurch wird im Unterwasserbereich mit elastischen, nicht durchlässigen Mitteln eine zuverlässige Abdichtung erzielt. Seitliche Verstopfungen durch Feststoffe sind daher nicht möglich.

Eine andere Weiterbildung der Erfindung sieht gemäß Anspruch 7 vor, daß sich im Bereich des Abwurfes eine Reinigungseinrichtung für das Filterband befindet, die nach Anspruch 8 wenigstens eine rotierende Bürste oder Bürstengruppe aufweisen kann. An oder in die Reinigungseinrichtung kann laut Anspruch 9 ein insbesondere abwärts gerundeter Abstreifer ragen, wodurch die Filterelemente in ebenso einfacher wie zuverlässiger Weise fortlaufend gereinigt werden.

Eine wichtige Ausführungsform der Erfindung, für die selbständiger Schutz in Anspruch genommen wird, besteht nach Anspruch 10 darin, daß einzelne oder alle Lochblech-Siebkörbe und/oder Stab-Roste auswärtsgewölbte, gebogene oder geknickte Flächen aufweisen. Mit dieser außerordentlich einfachen Maßnahme wird eine starke Vergrößerung der freien Durchgangsfläche erzielt. Die geformten Siebflächen ersetzen zugleich die Haken herkömmlicher Rechen und sind erheblich stabiler als diese. Der große Durchlaßquerschnitt gewährleistet eine vorzügliche Reinigungswirkung.

Die Filterelemente können nach Anspruch 11 seitliche Begrenzungsflächen vorzugsweise von asymmetrischer Form haben. Sie bilden eine Art Gliederblende, die als Schutzschirm herausgefilterte Feststoffe hält und beim Transport zum Abwurf daran hindert, vorher seitlich herabzufallen.

Die korbartigen Filterelemente können beispielsweise dreieckig-asymmetrisch oder -symmetrisch, aber auch halbrund oder flach sein. In der Ausgestaltung nach Anspruch 12 wechseln ebene und unebene Lochblech-Siebkörbe und/oder Stab-Roste einander im Filterband ab. Die Reihenfolge kann dabei so gewählt sein, daß beispielsweise auf je zwei unebene Lochblech-Siebkörbe und/oder Stab-Roste jeweils ein ebenes oder flaches Filterelement folgt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1 eine schematische Schrägansicht eines in einen Kanal eingebauten Filterrechens,

Fig. 2 eine vergrößerte Teil-Draufsicht entsprechend der Linie II-II in Fig. 1,

Fig. 3 eine schematisierte Teil-Seitenansicht eines Filterrechen-Kopfes,

Fig. 4 einen vergrößerten Querschnitt entsprechend der Linie IV-IV in Fig. 1 und

Fig. 5a bis 5d je eine schematisierte Teil-Seitenansicht verschiedener Filterbänder.

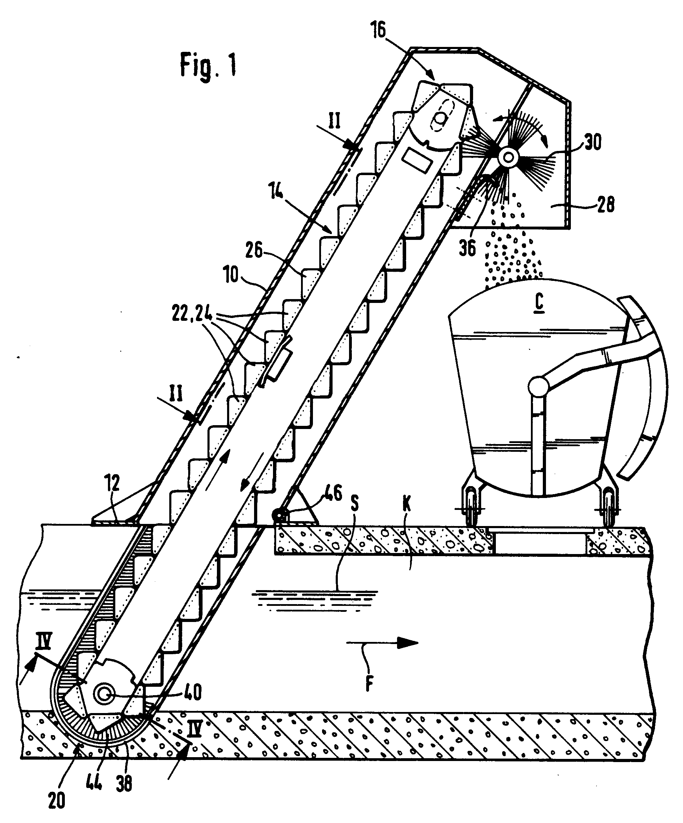

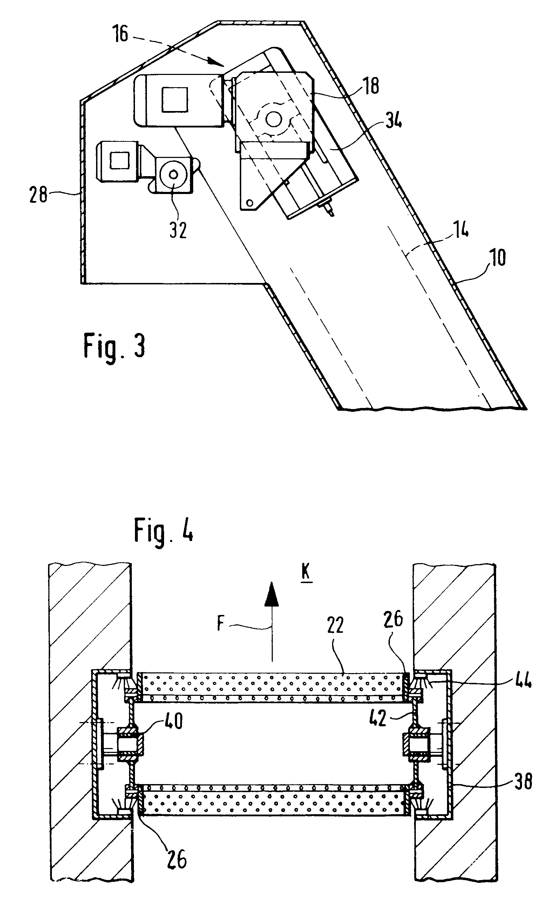

Der in Fig. 1 dargestellte Filterrechen hat ein Rahmengestell 10, das mit einer flanschartigen Befestigungsplatte 12 an der Deckfläche eines Kanals K befestigt ist. Im Rahmengestell 10 ist ein endloses Filterband 14 angeordnet, an dessen Kopf 16 ein mechanischer Antrieb 18 mit Kettenspanner 34 vorhanden ist (Fig. 3). Am Kopf 16 geht das Rahmengestell 10 in einen abwärtsgerichteten Abwurf 28 über, unter dem ein Container C aufgestellt werden kann.

Mit seinem unteren Teil 20 ragt der Filterrechen in den Kanal K hinein, in dem die zu reinigende Flüssigkeit in der Richtung F fließt, beispielsweise mit dem Flüssigkeitsspiegel S (Fig. 1).

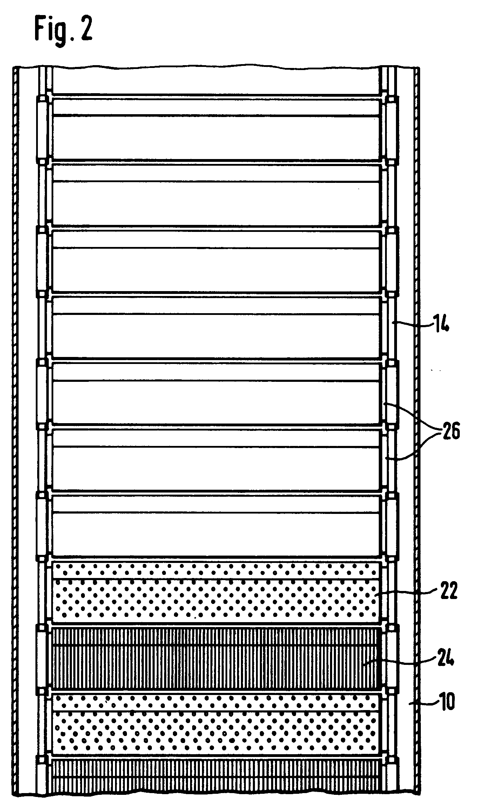

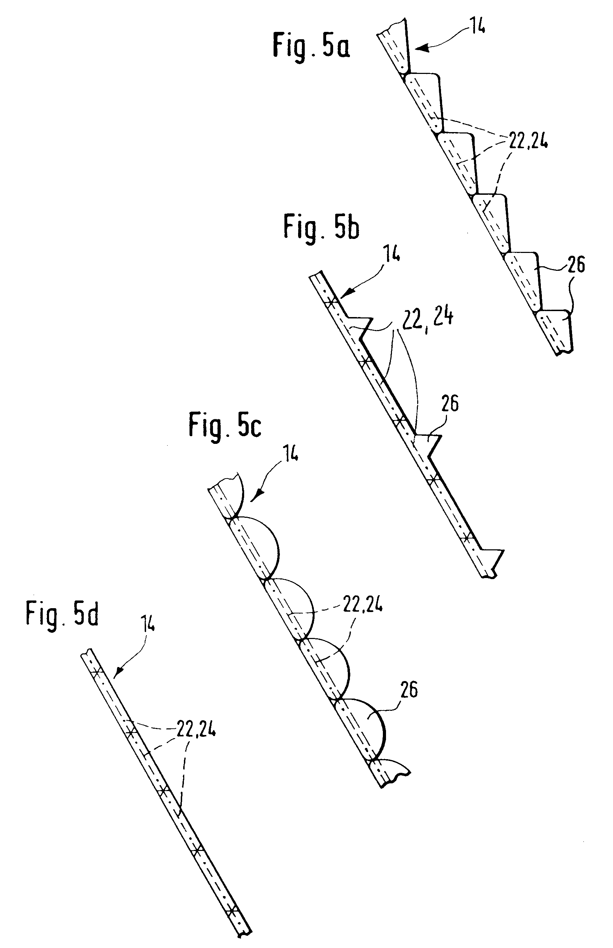

Das Filterband 14 weist eine Folge von Lochblech-Siebkörben 22 und Stab-Rosten 24 auf. Deren Ausbildung ist insbesondere aus Fig. 2 ersichtlich. Die LochblechSiebkörbe 22 bestehen aus Lochblechen mit Lochungen geeigneten Durchmessers, beispielsweise im Bereich von 3 mm bis 15 mm. Ähnliche Abmessungen können die Stäbe der Stab-Roste 24 haben. Die Filterelemente 22, 24 sind an beiden Seiten des Filterbandes 14 mit Seitenflächen 26 versehen, die besondere Formen haben können (vergleiche Fig. 1 und Fig. 5a bis 5c).

Die Stäbe der Stab-Roste 24 können verschiedenes Profil haben. Geeignet sind insbesondere Rund-, Dreikant-, Flach- und Fischprofile.

Am unteren Teil 20 des Filterrechens ist das Filterband 14 anströmseitig beiderseits abgedichtet, abströmseitig jedoch offen, so daß eventueller Schmutz an der Rückseite des Filterbandes 14 in Fließrichtung F ausgeschwemmt werden kann. Wie man aus Fig. 1 und 4 ersieht, hat der untere Teil 20 beiderseits eine Lagerung 40 für Walzen-Stirnseiten 42, an deren Umfang Abdichtbürsten 44 elastisch anliegen, und zwar unmittelbar neben der Außenkante des jeweiligen Filterelements 22 bzw. 24. Die ganze Anordnung ist mit Seitenkästen 38 in die Sohle des Kanals K eingelassen.

Am Oberteil, nämlich im Bereich des Abwurfes 28, ist dem Kopf 16 des Filterbandes 14 eine Reinigungsbürste 30 nachgeordnet (Fig. 1), die einen eigenen Antrieb 32 hat (Fig. 3). Von unten her ragt in die Reinigungsbürste 30 ein Abstreifer 36 hinein, dessen freies Ende abwärts gebogen sein kann. Von der Bürste 30 werden die Filterelemente 22, 24 mechanisch gereinigt, und der Abstreifer 36 trägt dazu bei, die hierbei mitgenommenen Feststoffe nach unten aus dem Abwurf 28 auszutragen. Die Bürste 30 kann in beiden Drehrichtungen wirksam sein, günstig ist jedoch vor allem ein Umlauf entgegen dem Uhrzeigersinn in Fig. 1, um Ablagerungen unmittelbar nach unten auszuwerfen.

Für manche Anwendungsfälle kann es vorteilhaft sei-n, ein Heizrohr 46 im Bereich der Befestigungsplatte 12 vorzusehen, um den oberen Teil des Filterrechens in geeigneter Weise vorzuwärmen.

Verschiedene Formen der Filterelemente sind beispielshalber in Fig. 5a bis 5d gezeigt. Man erkennt in Fig. 5a dreieckig-asymmetrisch geformte Lochblech-Siebkörbe 22 und Stab-Roste 24 mit entsprechend gestalteten Seitenflächen 26. Im Beispiel der Fig. 5b schließt jeweils ein auswärts gewölbtes Filterelement 22, 24 mit entsprechender Seitenfläche 26 an ein flaches Filterelement an, so daß sich flache und erhabene Elemente regelmäßig abwechseln. Bei der Ausführungsform von Fig. 5c sind die Lochblech-Siebkörbe 22 und Stab-Roste 24 und deren Seitenflächen 26 halbkreisförmig ausgebildet. Ein durchgehend flaches Filterband 14 zeigt Fig. 5d. Ersichtlich können verschiedene Ausführungen miteinander kombiniert werden, und zwar auch in anderer Reihenfolge als gezeichnet, so daß beispielsweise zwei oder mehr Filterelemente der einen Form jeweils mit einem Filterelement einer anderen Form abwechseln. Die Gestaltung ist dabei nicht auf die gezeigten Beispiele beschränkt.

**Patentansprüche**

1. Filterrechen zur mechanischen Reinigung von insbesondere strömenden Abwässern und verunreinigten Flüssigkeiten, mit einem Rahmengestell (10) für ein Filterband (14), an dessen Kopf (16) ein Antrieb (18) vorhanden ist und dessen unterer Teil (20) in einen Schacht, Kanal (K) oder dergleichen eintaucht, um mit teildurchlässigen Filterelementen (22, 24) Feststoffe aus dem Flüssigkeitsstrom herauszuheben und über einen Abwurf (28) auszutragen, dadurch gekennzeichnet, daß einige Filterelemente (22, 24) als Lochblech-Siebkörbe (22) und die übrigen als Stab-Roste (24) ausgebildet sind, wobei die freie bzw. Durchlaß-Fläche der Filterelemente (22, 24) wenigstens 50 % ihrer Gesamtfläche ausmacht.

2. Filterrechen nach Anspruch 1, dadurch gekennzeichnet, daß die freie bzw. Durchlaß-Fläche der Filterelemente (22, 24) über 70 % ihrer Gesamtfläche ausmacht.

3. Filterrechen nach Anspruch 1 oder 2, dadurch gekennzeichnet, daß die lichte Weite der Lochungen bzw. Durchgangsöffnungen im Bereich von 3 mm bis 15 mm liegt.

4. Filterrechen nach einem der Ansprüche 1 bis 3, dadurch gekennzeichnet, daß die lichte Weite der Zwischenräume zwischen den Stäben wenigstens gleich deren halber Stärke, vorzugsweise gleich ihrer Stärke oder größer als diese ist.

5. Filterrechen nach wenigstens einem der Ansprüche 1 bis 4, dadurch gekennzeichnet, daß im unteren Teil (20) des Filterbandes (14) beiderseits Abdichtbürsten (44) angeordnet sind.

6. Filterrechen nach Anspruch 5, dadurch gekennzeichnet, daß die Abdichtbürsten (44) anströmseitig entlang der ganzen Eintauchtiefe des unteren Teils (20) vorhanden sind und daß dieser abströmseitig offen ist.

7. Filterrechen nach wenigstens einem der Ansprüche 1 bis 6, dadurch gekennzeichnet, daß sich an, in oder neben dem Abwurf (28) eine Reinigungseinrichtung (30) für das Filterband (14) befindet.

8. Filterrechen nach Anspruch 7, dadurch gekennzeichnet, daß die Reinigungseinrichtung (30) wenigstens eine rotierende Bürste oder Bürstengruppe aufweist.

9. Filterrechen nach Anspruch 7 oder 8, dadurch gekennzeichnet, daß an oder in die Reinigungseinrichtung (30) ein insbesondere abwärts gerundeter Abstreifer (36) ragt.

10. Filterrechen nach wenigstens einem der Ansprüche 1 bis 9, dadurch gekennzeichnet, daß einzelne oder alle Lochblech-Siebkörbe (22) und/oder Stab-Roste (24) auswärts gewölbte, gebogene oder geknickte Flächen aufweisen (Fig. 5a bis 5d).

11. Filterrechen nach Anspruch 10, dadurch gekennzeichnet, daß die Filterelemente (22, 24) seitliche Begrenzungsflächen (26) haben, vorzugsweise von asymmetrischer Form (Fig. 5a).

12. Filterrechen nach Anspruch 10 oder 11, dadurch gekennzeichnet, daß ebene und unebene Lochblech-Siebkörbe (22) und/oder Stab-Roste (24) einander im Filterband (14) abwechseln.

**Claims**

1. Filter rake for mechanical cleansing in particular of flowing waste water and unpurified fluids, with a frame (10) for a filter belt (14), at the head (16) of which a drive (18) is provided, and the lower part (20) of the said frame being immersed in a shaft, channel (K) or the like in order to lift solids out of the fluid stream using partially permeable filter elements (22, 24) and discharge these solids via a discharge (28), characterised in that some of the filter elements (22, 24) are constructed as perforated basket sieves (22) and the others are constructed as bar grates (24), and the free or passage surface area of the filter elements (22, 24) makes up at least 50% of their total surface area.

2. Filter rake as claimed in claim 1, characterised in that the free or passage surface area of the filter elements (22, 24) makes up over 70% of their total surface area.

3. Filter rake as claimed in claims 1 or 2, characterised in that the internal width of the perforations or through openings is in the range from 3 mm to 15 mm.

4. Filter rake as claimed in one of claims 1 to 3, characterised in that the internal width of the spaces between the bars is at least equal to half the thickness thereof, preferably equal to their thickness or greater than that.

5. Filter rake as claimed in at least one of claims 1 to 4, characterised in that in the lower part (20) of the filter belt (14) sealing brushes (44) are arranged on both sides.

6. Filter rake as claimed in claim 5, characterised in that the sealing brushes (44) are provided along the entire depth of immersion of the lower part (20) on the inflow side and that the latter part is open on the outflow side.

7. Filter rake as claimed in at least one of claims 1 to 6, characterised in that a cleaning arrangement (30) for the filter belt (14) is located on, in or near the discharge (28).

8. Filter rake as claimed in claim 7, characterised in that the cleaning arrangement (30) has at least one rotating brush or group of brushes.

9. Filter rake as claimed in claims 7 or 8, characterised in that a scraper (36) which is in particular curved downwards projects into the cleaning arrangement (30).

10. Filter rake as claimed in at least one of claims 1 to 9, characterised in that individual or all perforated basket sieves (22) and/or bar grates (24) have surfaces which are bowed outwards, curved or bent (Figures 5a to 5d).

11. Filter rake as claimed in claim 10, characterised in that the filter elements (22, 24) have lateral boundary surfaces (26), preferably of asymmetrical shape (Figure 5a).

12. Filter rake as claimed in claims 10 or 11, characterised in that flat and uneven perforated basket sieves (22) and/or bar grates (24) alternate with one another in the filter belt (14).

**Revendications**

1. Grille de filtrage destinée au nettoyage mécanique, en particulier d'eaux usées et de liquides pollués en écoulement, comportant un bâti de cadre (10) destiné à une bande transporteuse de filtrage (14) sur la tête (16) duquel est placé un entraînement (18) et dont la partie inférieure (20) plonge dans un puits, un canal (K), ou similaire, pour extraire vers le haut, à l'aide d'éléments de filtre partiellement perméables (22, 24), des matières solides hors du courant de liquide et les décharger au moyen d'un déversement (28), caractérisé en ce que certains éléments de filtre (22, 24) sont réalisés sous forme de paniers de tamisage (22) en tôle perforée et les autres sous forme de grilles (24) à barreaux, la surface libre ou surface de passage des éléments de filtre (22, 24) constituant au moins 50 % de leur surface totale.

2. Grille de filtrage selon la revendication 1, caractérisée en ce que la surface libre ou surface de passage des éléments de filtre (22, 24) constitue au moins 70 % de leur surface totale.

3. Grille de filtrage selon la revendication 1 ou 2, caractérisée en ce que la largeur libre des orifices ou ouvertures de passage est comprise dans la zone de 3 mm à 15 mm.

4. Grille de filtrage selon l'une des revendications 1 à 3, caractérisée en ce que la largeur libre des espaces intermédiaires entre les barreaux est au moins égale à la moitié de leur épaisseur, de préférence égale à leur épaisseur ou supérieure à celle-ci.

5. Grille de filtrage selon l'une au moins des revendications 1 à 4, caractérisée en ce que des brosses d'étanchéité (44) sont disposées des deux côtés de la partie inférieure (20) de la bande transporteuse de filtrage (14).

6. Grille de filtrage selon la revendication 5, caractérisée en ce que les brosses d'étanchéité (44) sont placées sur le côté amont le long de toute la profondeur de plongée de la partie inférieure (20) et que cette partie est ouverte côté aval.

7. Grille de filtrage selon l'une au moins des revendications 1 à 6, caractérisée en ce qu'un dispositif de nettoyage (30) destiné à la bande transporteuse de filtrage (14) est disposé sur le déversement (28) ou à côté de celui-ci.

8. Grille de filtrage selon la revendication 7, caractérisée en ce que les dispositifs de nettoyage (30) comportent au moins une brosse ou un groupe de brosses tournantes.

9. Grille de filtrage selon la revendication 7 ou 8, caractérisée en ce qu'un racloir (36), arrondi en particulier vers l'arrière, fait saillie sur le dispositif de nettoyage (30) ou dans celui-ci.

10. Grille de filtrage selon l'une au moins des revendications 1 à 9, caractérisée en ce que certains des paniers de tamisage (22) en tôle perforée, ou la totalité de ceux-ci et/ou des grilles en barreaux (24) présentent des surfaces bombées, incurvées ou coudées vers l'extérieur (Fig. 5a à 5d).

11. Grille de filtrage selon la revendication 10, caractérisée en ce que les éléments de filtre (22, 24) comportent des surfaces de limite latérales (26), de préférence de forme asymétrique (Fig. 5a).

12. Grille de filtrage selon la revendication 10 ou 11, caractérisée en ce que des paniers de tamisage (22) en tôle perforée, et/ou des grilles (24) en barreaux, plans et non plans, sont disposés en alternance dans la bande transporteuse de filtrage (14).

Fig. 1

Fig. 2

Fig. 3

Fig. 4

Fig. 5a

14

22,24

26

Fig. 5b

14

22, 24

26

Fig. 5c

14

22,24

26

Fig. 5d

14

22,24